# EUROPEAN PATENT SPECIFICATION

(11) **EP 3 748 549 B1**
(45) Date of publication and mention of the grant of the patent: **07.06.2023**
(21) Application number: 18909932.8
(22) Date of filing: 16.03.2018
(51) Int. Cl.: G06N 3/08, G06N 3/04

(54) **LEARNING DEVICE AND LEARNING METHOD**
LERNVORRICHTUNG UND LERNVERFAHREN
DISPOSITIF ET PROCÉDÉ D'APPRENTISSAGE

(43) Date of publication of application: 09.12.2020
(73) Proprietor: Mitsubishi Electric Corporation, Tokyo 100-8310 (JP)
(72) Inventor: FUJINO, Tomoya, Tokyo 100-8310 (JP)
(74) Representative: Pfenning, Meinig & Partner mbB
(86) International application number: PCT/JP2018/010446
(87) International publication number: WO 2019/176087

(56) References cited:
- WO-A1-2017/090098
- JP-A- H07 168 799
- JP-A- 2006 226 708
- JP-A- 2017 102 906
- JP-A- 2017 224 027
- US-A1- 2015 120 624
- US-A1- 2015 193 698

## Description

### TECHNICAL FIELD

The present invention relates to a learning device and a learning method for learning a classifier for performing abnormality detection on image data using a neural network.

### BACKGROUND ART

Generally, learning image data used for performing abnormality detection is determined to be normal (hereinafter referred to as OK) or abnormal (hereinafter referred to as NG) for each image.

Meanwhile, in learning image data determined to be NG, an image area including an NG element is often local, and most areas are not locally different from learning image data that is determined to be OK.

Known in the related art is machine learning that uses learning data including multiple elements in each of which is determined to be OK or NG.

For example, Patent Literature 1 discloses technology in which an input image is divided into multiple image areas, and a label for distinguishing between a foreground and a background is assigned to each of the divided image areas. In this technology, it is estimated whether a pixel to which an unconfirmed label has been assigned is a foreground or a background on the basis of continuity from an image area assigned with a confirmed label of the foreground or the background.

Patent Literature 2 discloses as a problem to be solved to provide a machine learning method, a computer and a program capable of improving the quality of teacher data used for machine learning. As a solution Patent Literature 2 provides a machine learning system that generates by machine learning a labeling model for performing labeling on an image. The machine learning system uses a test image (person), a test image (object), a teacher image (person), a teacher image (object), an exemplary teacher image (person/good), and an exemplary teacher image (person/not good). The machine learning system performs quality determination on the teacher images on the basis of the exemplary teacher image, and if prediction accuracy of machine learning based on both of the good and the not-good teacher images is high, sets the teacher image (not good) to the model teacher image (good).

More information can be found in Patent Literature 3. Therein, an information processing apparatus is provided including a sorting unit configured to sort a second data set as evaluation data with a sorter generated by learning through supervised learning that uses a first data set as teacher data, an input unit configured to receive label correction for the second data set in accordance with a sorting result from the sorting unit, and an update unit configured to update the second data set to reflect the correction received by the input unit.

Furthermore, in Patent Literature 4 a device operation status identification device is provided and method with which it is possible to automatically and accurately distinguish between device operation statuses at low cost under low network load. The invention is provided with a data acquisition unit for acquiring data relating to the device operation status, a feature amount extraction unit for extracting feature amounts on the basis of the data acquired by the data acquisition unit, a clustering unit for classifying the feature amounts extracted by the feature amount extraction unit to create clusters, a labeled-data creating unit for creating data in which the feature amounts classified by the clustering unit are labeled with the clustered device operation statuses to which the classified feature amounts belong, a memory unit for storing the data created by the labeled-data creating unit, and a status determining unit for determining the device operation status on the basis of the feature amounts extracted by the feature amount extraction unit and the data stored in the memory unit and outputting the determination results.

Another source of information may be Patent Literature 5 which concerns a data processing device that includes a storage part, a machine learning part, a classifying part, and a user interface part. The storage part stores a plurality of teacher data each including content and a label representing a category to which the content belongs. The machine learning part generates a classification model by using the plurality of teacher data. The classifying part determines the category that the content of each of the plurality of teacher data belongs by using the classification model. The user interface part causes a display part to display the content and label of the teacher data and the category that the content belongs determined by the classifying part.

Also of interest may be Patent Literature 6 where the problem to be solved is to determine an appropriate parameter of a discriminator even when sufficient data of defective items cannot be used. The provided solution concerns an information processing apparatus that comprises: receiving means that receives a plurality of pieces of learning data used for creating a discriminator for determination that determines whether object data is specific category data or non-specific category data; first data evaluation means that determines first likelihood indicating the probability that the learning data are the specific category data; and parameter determination means that determines parameters of the discriminator for determination on the basis of the first likelihood of each of the plurality of pieces of learning data.

Information is also available in Patent Literature 7. The problem addressed therein is to provide a quality determination device, a quality determination method and a quality determination program capable of performing quality determination accurately even in the case where a plurality of modes are mixed. The suggested solution is: In the case where some element in a bad group N having a different quality attribute is mixed in a distribution domain of a good group G, or in the case where some element in the good group G having a different quality attribute is mixed in a distribution domain of the bad group N, new groups A, B, C, D are formed around the mixed projection element, and the groups are subdivided. Since it is determined whether a parameter value of an inspection object is close to each center value Dg, Cn, Ca, Cb, Cc, Cd of the subdivided groups G, N, A, B, C, D or not, highly-accurate quality determination can be achieved.

Patent Literature 8 may also be considered. The purpose of the disclosed subject matter is to enhance the efficiency of learning by providing a sensitivity representative value calculation means which finds the representative value of the sensitivity of output data when micro change is applied to the input data of teacher data and a recognition result correct answer degree calculation means which calculates the correct answer degree of a recognition result, and judging whether or not the learning for each teacher data should be continued based on the output of these means. The disclosure also concerns the following: the sensitivity representative value calculation means finds the representative value of sensitivity of the output data of a neural network when the micro change is applied to the sensitivity for respective teacher data i.e., the input data of the teacher data. The recognition result correct answer degree calculation means calculates the correct answer degree of the recognition result for respective teacher data. The correction answer degree can be calculated by comparing the actual output value of an output layer neuron with the output data of the teacher data. Furthermore, a learning condition judging means judges whether or not the learning for respective teacher data should be continued based on the output of the sensitivity representative value calculation means and that of the recognition result correct answer degree calculation means.

### CITATION LIST

### PATENT LITERATURE

Patent Literature 1: JP 2012-208913 A
Patent Literature 2: JP 2017-224027 A
Patent Literature 3: US 2015/120624 A1
Patent Literature 4: WO 2017/090098 A1
Patent Literature 5: US 2015/193698 A1
Patent Literature 6: JP 2017-102906 A
Patent Literature 7: JP 2006-226708 A
Patent Literature 8: JP H07-168799 A

### SUMMARY OF INVENTION

### TECHNICAL PROBLEM

In a case where an image, a moving image, or multidimensional data is classified as OK or NG by machine learning, data determined to be OK or NG by a human is often provided as learning data. However, it is rare that all elements included in the learning data are NG, and in many cases determination as NG is made only from unspecified elements. Using such learning data results in erroneously learning an element that is originally OK as NG, and thus there is a disadvantage that the classification accuracy of a classifier, as a learning result, is deteriorated.

An object of the present invention is to solve the above disadvantage, and an object of the invention is to obtain a learning device and a learning method that can provide a classifier that performs highly accurate classification.

### SOLUTION TO PROBLEM

The present invention is set out in the appended set of claims.

### ADVANTAGEOUS EFFECTS OF INVENTION

According to the present invention, the learning device can provide a classifier for performing high-precision classification by determining at least one piece of data belonging to a group to be NG.

### BRIEF DESCRIPTION OF DRAWINGS

FIG. 1 is a block diagram illustrating a configuration of a learning device according to a first embodiment of the invention.
FIG. 2 is a block diagrams illustrating a detailed configuration of a learning device according to the first embodiment.
FIG. 3 is a table illustrating an example of the contents of a learning data DB.
FIG. 4 is a table illustrating an example of the contents of an NG determination group DB.
FIG. 5 is a table illustrating an example of the contents of a learning reference label buffer.
FIG. 6 is a diagram illustrating an example of a configuration of a neural network.
FIG. 7 is a table illustrating an example of the contents of an NG index value buffer.
FIG. 8 is a table illustrating an example of the contents of a history buffer.
FIG. 9 is a table illustrating an example of the contents of an NG candidate buffer.
FIG. 10A is a block diagram illustrating a hardware configuration for implementing functions of the learning device according to the first embodiment. FIG. 10B is a block diagram illustrating a hardware configuration for executing software for implementing the functions of the learning device according to the first embodiment.
FIG. 11 is a flowchart illustrating a learning method according to the first embodiment.
FIG. 12 is a flowchart illustrating a learning reference label generating process.
FIG. 13 is a flowchart illustrating a neural network managing process.
FIG. 14 is a flowchart illustrating a history managing process of NG index values.
FIG. 15 is a flowchart illustrating a statistical test process of NG index values.
FIG. 16 is a flowchart illustrating a learning reference label updating process.
FIG. 17 is a flowchart illustrating a neural network parameter updating process.

### DESCRIPTION OF EMBODIMENTS

To describe the present invention further in detail, embodiments for carrying out the invention will be described below along with the accompanying drawings.

### First Embodiment

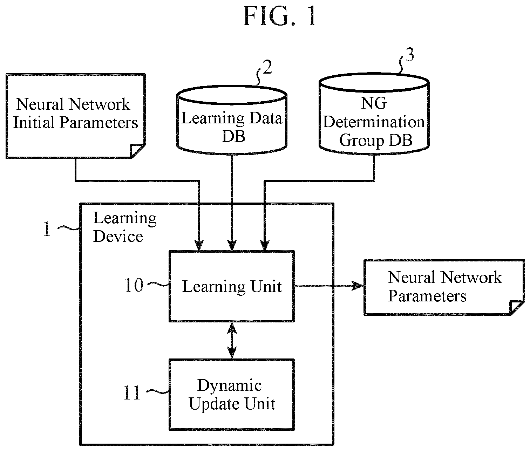

FIG. 1 is a block diagram illustrating a configuration of a learning device 1 according to a first embodiment of the invention.

The learning device 1 generates neural network parameters that provide a classifier of a learning result, by updating neural network initial parameters using learning data input from a learning data database (hereinafter referred to as the learning data DB) 2 and NG determination group information input from an NG determination group database (hereinafter referred to as the NG determination group DB) 3.

The learning data stored in the learning data DB 2 includes multiple elements. The learning data is image data, individual image areas obtained by dividing an image indicated by the image data into multiple pieces are elements. In the NG determination group information stored in the NG determination group DB 3, it is defined that at least one piece of data belonging to an NG determination group is determined to be NG.

The learning device 1 includes a learning unit 10 and a dynamic update unit 11. The learning unit 10 inputs learning data from the learning data DB 2, inputs NG determination group information from the NG determination group DB 3, and learns a neural network by inputting multiple elements of the learning data and using a learning reference label for each of the elements of the learning data. A learning reference label is information in which an OK label or an NG label is assigned to each of the elements of the learning data. The learning unit 10 outputs neural network parameters that provide the classifier that determines at least one piece of the data belonging to the NG determination group to be NG.

The learning unit 10 further generates an initial value of a learning reference label for each of the elements of the learning data using the learning data and the NG determination group information, and repetitively learns the neural network by sequentially using a learning reference label that is dynamically updated from the initial value of the learning reference label by the dynamic update unit 11. The learning unit 10 calculates an index value with which an element of the learning data can be NG (hereinafter, referred to as an NG index value), by using an output value of the neural network for each repetition of learning.

The dynamic update unit 11 dynamically updates the learning reference label while the learning unit 10 learns the neural network. Specifically, the dynamic update unit 11 statistically tests the change trend of the NG index value obtained for each transition of the number of learning repetitions, and updates the learning reference label on the basis of the statistical test result. The dynamic update unit 11 updates an NG label, assigned to an element that is originally OK in the learning reference label, to an OK label by using the statistical test result of the change trend of NG index values.

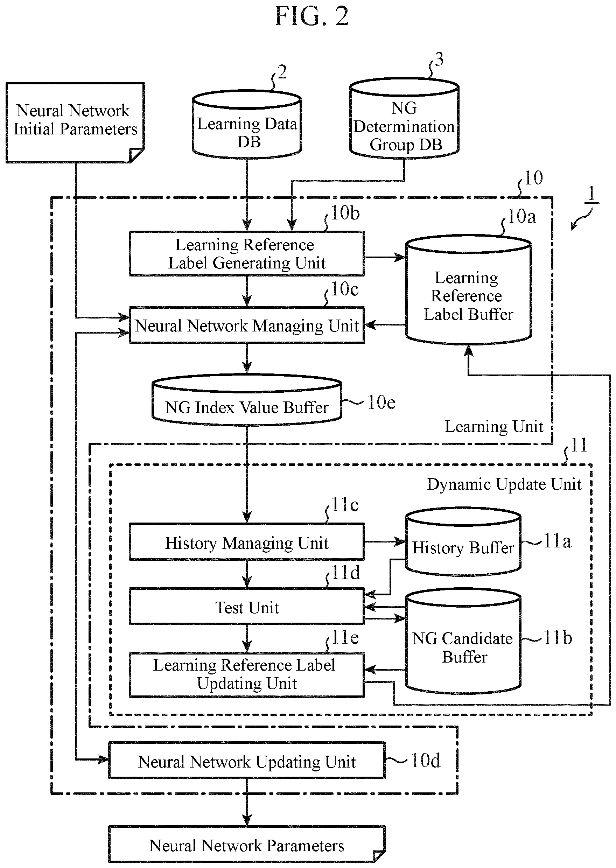

FIG. 2 is a block diagram illustrating a detailed configuration of the learning device 1 according to the first embodiment. As illustrated in FIG. 2, the learning unit 10 includes a learning reference label buffer 10a, a learning reference label generating unit 10b, a neural network managing unit 10c, a neural network updating unit 10d, and an NG index value buffer 10e. The dynamic update unit 11 includes a history buffer 11a, an NG candidate buffer 11b, a history managing unit 11c, a test unit 11d, and a learning reference label updating unit 11e.

Neural network initial parameters are parameters that define the initial state of the neural network. For example, the neural network initial parameters include initial values of the number of nodes of a hidden unit in the neural network, weight parameters assigned between nodes, bias parameters, and learning rate parameters. These parameters are described in Reference Literature 1 below. With the learning device 1 updating the neural network initial parameters, neural network parameters are generated which provide the classifier that determines at least one piece of data belonging to the NG determination group to be abnormal.

Reference Literature 1: C. M. Bishop, Hiroshi Motoda (supervising a translation), "Pattern Ninshiki To Kikai Gakusyu, Jyou", Maruzen Publishing, pp. 225-247.

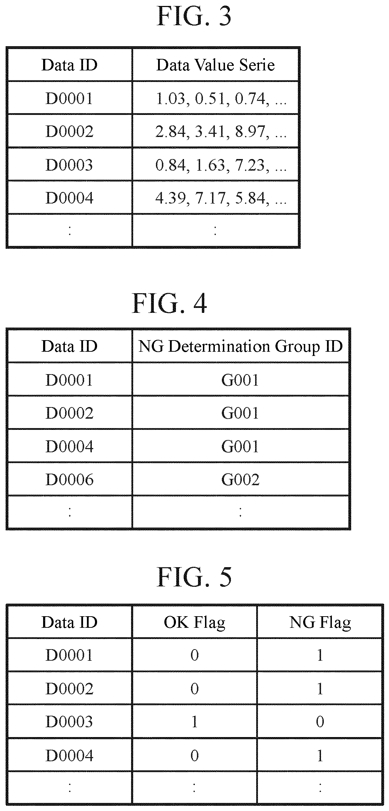

The learning data DB 2 stores learning data including multiple elements. FIG. 3 is a table illustrating an example of the contents of the learning data DB 2. In FIG. 3, learning data includes multiple elements identified by respective "data IDs", and each of the multiple elements includes a "data value series". For example, illustrated in FIG. 3 are an element having a data ID of D0001, an element having a data ID of D0002, an element having a data ID of D0003, an element having a data ID of D0004,......, which are included in certain learning data.

The NG determination group DB 3 stores NG determination group information including classification information of NG determination groups and classification information of elements of learning data belonging to the NG determination groups.

FIG. 4 is a table illustrating an example of the contents of the NG determination group DB 3. Each of the multiple elements included in the learning data is classified by a "data ID" as in FIG. 3. An NG determination group is classified by an "NG determination group ID". For example, an element having a data ID of D0001, an element having a data ID of D0002, and an element having a data ID of D0004 belong to an NG determination group having an NG determination group ID of G001, and at least one of these elements is determined to be NG.

The learning reference label buffer 10a stores a learning reference label for each element of the learning data. FIG. 5 is a table illustrating an example of the contents of the learning reference label buffer 10a. As illustrated in FIG. 5, learning reference label information includes data ID, OK flag, and NG flag of each of the elements of the learning data. Each of the multiple elements included in the learning data is classified by a "data ID" as in FIG. 3. For an element assigned with an OK label, value 1 is set in the OK flag corresponding to this element, and value 0 is set in the NG flag corresponding to this element. Conversely, for an element assigned with an NG label, value 0 is set in the OK flag corresponding to this element, and value 1 is set in the NG flag corresponding to this element.

The learning reference label generating unit 10b generates initial values of the learning reference label on the basis of a determination result as to whether or not the learning data belongs to the NG determination group. For example, the learning reference label generating unit 10b determines whether or not among the data IDs of the elements registered in the learning data DB 2, there is a data ID which is same as that of an element belonging to the NG determination group in the NG determination group DB 3. If it is determined that there is a same data ID as that of an element belonging to the NG determination group, the learning reference label generating unit 10b generates a learning reference label in which value 0 is set in the OK flag corresponding to this element and value 1 is set in the NG flag corresponding thereto, and stores the learning reference label in the learning reference label buffer 10a.

The neural network managing unit 10c manages learning of a neural network for sorting an element corresponding to a data ID stored in the learning data DB 2 to a class (OK class or NG class) that corresponds to a flag having a value of 1 among the OK flag and the NG flag that corresponds to the data ID in the learning reference label buffer 10a.

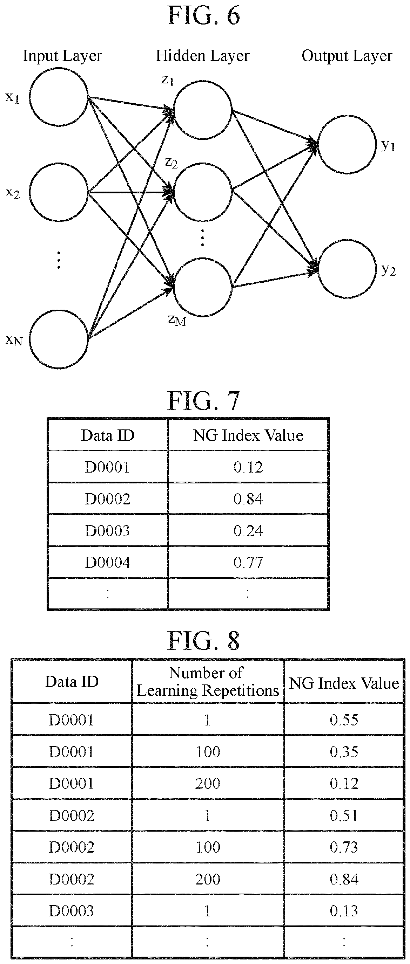

FIG. 6 is a diagram illustrating an example of a configuration of the neural network. As illustrated in FIG. 6, the neural network includes an input layer, a hidden layer, and an output layer. When a data value series x₁, x₂,..., x_{N} included in an element of learning data is input to the input layer, z₁, z₂,..., z_{M} are calculated by nonlinear transformation of the multiplication sum of weight parameters between the input layer nodes and the hidden layer nodes and x₁, x₂,..., x_{N}. Subsequently, y₁ and y₂ obtained by nonlinearly transforming the multiplication sum of weight parameters between the hidden layer nodes and the output layer nodes and z₁, z₂,..., z_{M} are output from the output layer.

The output values y₁ and y₂ are NG evaluation values for each class, with the output value y₁ representing the degree to which the element belongs to the OK class, and the output value y₂ representing the degree to which the element belongs to the NG class. An element (data value series) input to the neural network is determined to belong to the OK class when y₁ > y₂ holds, and is determined to belong to the NG class when y₁ ≤ y₂ holds. The NG index value may be a ratio between y₂ and y₁ corrected so that the denominator of the ratio is other than 0; however, hereinafter, y₂ - y₁ will be the NG index value.

Note that although the neural network having one hidden layer is illustrated in FIG. 6, the neural network managed by the neural network managing unit 10c may have multiple hidden layers.

The neural network updating unit 10d outputs neural network parameters that provide a classifier of a learning result by updating neural network parameters on the basis of the NG index value obtained by the neural network managing unit 10c. For example, the neural network updating unit 10d updates neural network parameters using the parameter optimization method described in Reference Literature 1. When the number of repetitions of learning reaches a threshold value or when the condition for terminating the learning is satisfied, the neural network updating unit 10d outputs neural network parameters optimized and updated at that stage to the outside of the learning device 1.

The NG index value buffer 10e stores an NG index value for each element of the learning data obtained in the course of learning repetitions of the neural network. FIG. 7 is a table illustrating an example of the contents of the NG index value buffer 10e. A data ID of an element of the learning data, and an NG index value as of the time when calculated by the neural network managing unit 10c, out of NG index values of this element, are set in the NG index value buffer 10e.

The history buffer 11a stores the number of learning repetitions and an NG index value corresponding thereto for each element of the learning data. FIG. 8 is a table illustrating an example of the contents of the history buffer 11a. In the history buffer 11a, NG index values for the number of learning repetitions of 1, 100, and 200 are set. For example, for an element with a data ID of D0001, an NG index value obtained when the number of learning repetitions is 1 is 0.55, an NG index value obtained when the number of learning repetitions is 100 is 0.35, and an NG index value obtained when the number of learning repetitions is 200 is 0.12.

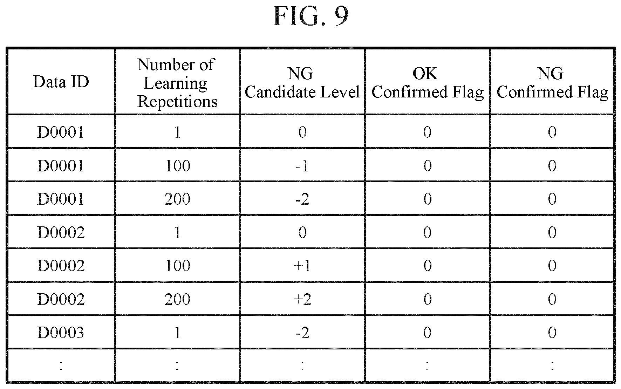

The NG candidate buffer 11b stores the number of learning repetitions, an NG candidate level, an OK confirmed flag, and an NG confirmed flag for each element of the learning data. FIG. 9 is a table illustrating an example of the contents of the NG candidate buffer 11b. As illustrated in FIG. 9, data IDs of elements of the learning data, NG candidate levels, OK confirmed flags, and the NG confirmed flags are set in the NG candidate buffer 11b. The NG candidate level varies depending on a past value of the NG index value.

An NG candidate is an element assigned with an NG label in the learning reference label, and an NG candidate level corresponds to an NG index value that corresponds to the element of the NG candidate.

An OK confirmed flag indicates that an element is confirmed to be OK. For example, if value 0 is set in the OK confirmed flag, it indicates that the element corresponding to the OK confirmed flag is not confirmed to be OK, and if value 1 is set, it indicates that the element corresponding to the OK confirmed flag is confirmed to be OK. On the other hand, an NG confirmed flag indicates that an element is confirmed to be NG. For example, if value 0 is set in the NG confirmed flag, it indicates that the element corresponding to the NG confirmed flag is not confirmed to be NG, and if value 1 is set, it indicates that the element corresponding to the NG confirmed flag is confirmed to be NG.

The history managing unit 11c stores, in the history buffer 11a, an NG index value for each element of the learning data, obtained for each repetition of learning. For example, the history managing unit 11c stores, in the history buffer 11a, an NG index value stored in the NG index value buffer 10e together with the number of learning repetitions at that time. As a result, an NG index value obtained at each preset number of learning repetitions (in the example of FIG. 8, one time, 100 times, and 200 times) is stored in the history buffer 11a.

The test unit 11d statistically tests the change trend of NG index values stored in the history buffer 11a, and updates the contents of the NG candidate buffer 11b for each element of the learning data on the basis of the statistical test result. For example, the test unit 11d extracts, from the history buffer 11a, a time series of NG index values for respective transitions of the number of learning repetitions that corresponds to the element to be processed. Next, the test unit 11d statistically tests the time series of the NG index values extracted from the history buffer 11a to confirm the change trend of the NG index values.

The test unit 11d performs an irregularity test on the time series of the NG index values. In a case where by the irregularity test it is confirmed that there is no regularity in the change of the NG index values, the test unit 11d leaves this element as the NG candidate. In a case where it is confirmed that there is regularity, the test unit 11d performs a trend test on the time series of the NG index values. If by the trend test it is confirmed that the NG index values have an upward trend, the test unit 11d leaves this element as the NG candidate.

When the time series of the NG index values has regularity and an upward trend thereof is confirmed, the test unit 11d determines this element to be NG-confirmed, and sets value 1 to the NG confirmed flag corresponding to this element in the NG candidate buffer 11b. On the other hand, when the time series of the NG index values has regularity and a downward trend thereof is confirmed, the test unit 11d determines this element to be OK-confirmed, and sets value 1 to the OK confirmed flag corresponding to this element in the NG candidate buffer 11b.

As methods of testing the irregularity and the trend, test methods described in Reference Literature 2 below may be used.

Reference Literature 2: Shinsuke Muto, "Toukei Kaiseki Handbook", Asakura Publishing Co. Ltd., pp. 398-399 and 402-403.

The learning reference label updating unit 11e updates the learning reference label of an element of the learning data that is confirmed to be OK by the test unit 11d, from the NG label to the OK label. For example, when an element of the learning data is confirmed to be OK by the test unit 11d, the learning reference label updating unit 11e sets value 1 to the OK flag in the learning reference label corresponding to this element, and sets value 0 to the NG flag.

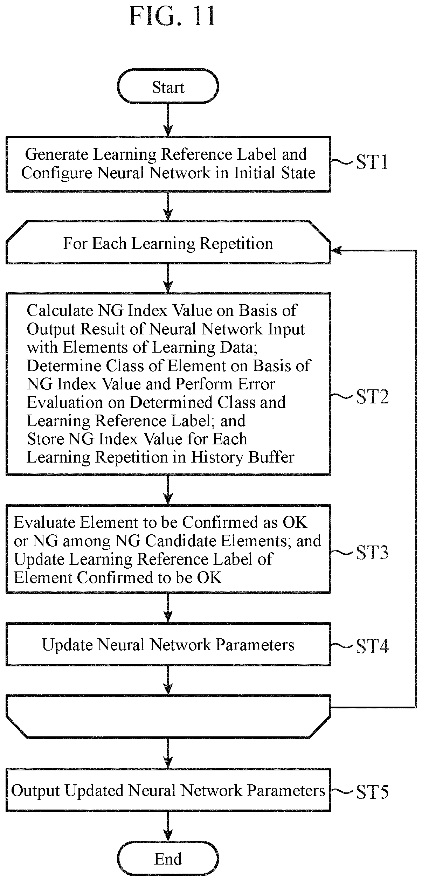

The functions of the learning unit 10 and the dynamic update unit 11 in the learning device 1 are implemented by a processing circuit. That is, the learning device 1 includes a processing circuit for performing processes of steps ST1 to ST5 in FIG. 11 which will be described later. The processing circuit may be dedicated hardware or a central processing unit (CPU) for executing a program stored in a memory.

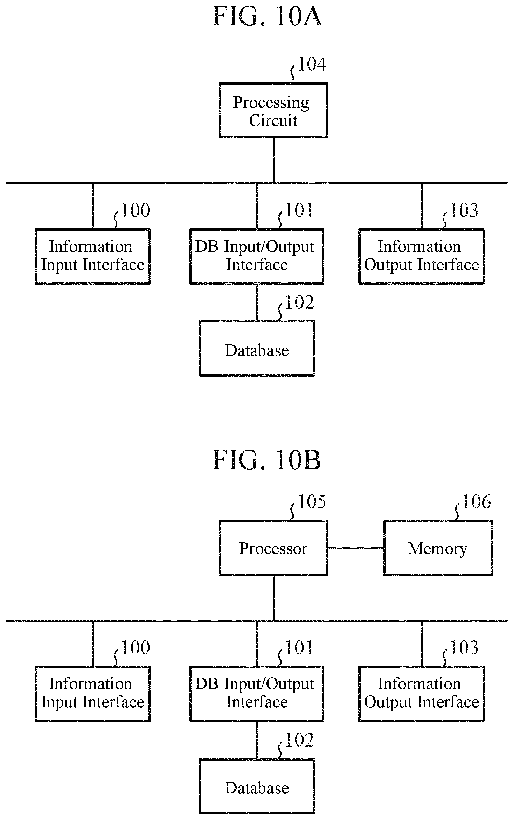

FIG. 10A is a block diagram illustrating a hardware configuration for implementing the functions of the learning device 1. FIG. 10B is a block diagram illustrating a hardware configuration for executing software for implementing the functions of the learning device 1. In 10A and 10B, an information input interface 100 relays input of information from an external device (not illustrated) to the learning device 1 illustrated in FIGS. 1 and 2. For example, the neural network managing unit 10c illustrated in FIG. 2 inputs neural network initial parameters from an external device via the information input interface 100. The external device may be a storage device provided independently of the learning device 1. For example, the learning device 1 may use a storage device on a cloud network.

ADB input/output interface 101 relays data exchange between the learning device 1 and a database 102. The database 102 corresponds to the learning data DB 2 and the NG determination group DB 3 illustrated in FIGS. 1 and 2. For example, the learning reference label generating unit 10b included in the learning unit 10 inputs data from the learning data DB 2 and the NG determination group DB 3 via the DB input/output interface 101. Note that the database 102 may be configured in a storage device provided independently of the learning device 1. For example, the learning device 1 inputs data from the database 102 configured in a storage device on a cloud network via the DB input/output interface 101.

The learning reference label buffer 10a, the NG index value buffer 10e, the history buffer 11a, and the NG candidate buffer 11b illustrated in FIG. 2 are configured in a memory incorporated in a processing circuit 104 illustrated in FIG. 10A or in a memory 106 illustrated in FIG. 10B. An information output interface 103 relays information output from the learning device 1 to an external device (not illustrated). For example, the neural network updating unit 10d illustrated in FIG. 2 outputs neural network parameters to the external device via the information output interface 103. The external device may be, for example, an abnormality detection device that uses a classifier provided by the neural network parameters.

In a case where the processing circuit is the processing circuit 104 of dedicated hardware illustrated in FIG. 10A, the processing circuit 104 may be, for example, a single circuit, a composite circuit, a programmed processor, a parallel programmed processor, an application specific integrated circuit (ASIC), a field-programmable gate array (FPGA), or a combination thereof. The functions of the learning unit 10 and the dynamic update unit 11 in the learning device 1 may be implemented by separate processing circuits, or these functions may be collectively implemented by a single processing circuit.

In the case where the processing circuit is the processor 105 illustrated in FIG. 10B, the functions of the learning unit 10 and the dynamic update unit 11 in the learning device 1 are implemented by software, firmware, or a combination of software and firmware. Note that the software or the firmware is described as a program and is stored in the memory 106.

The processor 105 reads and executes the program stored in the memory 106 and thereby implements functions of the learning unit 10 and the dynamic update unit 11 in the learning device 1.

That is, the learning device 1 includes the memory 106 for storing programs execution of which by the processor 105 results in execution of processes of steps ST1 to ST5 illustrated in FIG. 11. These programs cause a computer to execute the procedure or method of the learning unit 10 and the dynamic update unit 11. The memory 106 may be a computer-readable storage medium storing the programs for causing a computer to function as the learning unit 10 and the dynamic update unit 11.

The memory 106 corresponds to a nonvolatile or volatile semiconductor memory such as a random access memory (RAM), a read only memory (ROM), a flash memory, an erasable programmable read only memory (EPROM), or an electrically-EPROM (EEPROM), a magnetic disc, a flexible disc, an optical disc, a compact disc, a mini disc, a DVD, or the like.

Some of the functions of the learning unit 10 and the dynamic update unit 11 may be implemented by dedicated hardware, and some thereof may be implemented by software or firmware. For example, the learning unit 10 implements functions thereof using a processing circuit that is dedicated hardware, whereas the dynamic update unit 11 implements functions thereof by causing the processor 105 to read and execute programs stored in the memory 106. In this manner, the processing circuit can implement the functions described above by hardware, software, firmware, or a combination thereof.

Next, the operation will be described.

FIG. 11 is a flowchart illustrating a learning method according to the first embodiment.

In step ST1, the learning reference label generating unit 10b sets value 0 to the OK flag corresponding to an element belonging to the NG determination group and sets value 1 to the NG flag corresponding thereto, among the multiple elements of the learning data, and thereby generates a learning reference label for each of the elements of the learning data. Moreover, the neural network managing unit 10c configures an initial state neural network using the neural network initial parameters.

In step ST2, the neural network managing unit 10c inputs the elements of the learning data to the neural network, and calculates an NG index value for each of the elements on the basis of the output result of the neural network. Next, the neural network managing unit 10c determines whether a target element belongs to the OK class or the NG class on the basis of the NG index value. Subsequently, the neural network managing unit 10c performs error evaluation on the initial value of the learning reference label corresponding to the target element and the learning reference label updated by the dynamic update unit 11, and the determined class, by using an error function. A function described in Reference Literature 1 may be used as the error function. Furthermore, the history managing unit 11c stores the NG index values obtained each time the learning is repeated in the history buffer 11a.

In step ST3, the test unit 11d evaluates whether an NG candidate element is to be confirmed to be OK or NG, on the basis of the result of statistically testing the change trend of the NG index values stored in the history buffer 11a. The learning reference label updating unit 11e updates the learning reference label on the basis of the evaluation result by the test unit 11d. For example, the learning reference label updating unit 11e updates the learning reference label corresponding to an element confirmed to be OK by the test unit 11d, from an NG label to an OK label.

In step ST4, the neural network updating unit 10d updates neural network parameters on the basis of the NG index value obtained by the neural network managing unit 10c. The series of learning processes from step ST2 to step ST4 is repetitively performed for each of the multiple elements included in the learning data.

When the learning repetition is completed, the neural network updating unit 10d outputs the neural network parameters updated by the above-described series of learning, as a learning result (step ST5).

Next, a learning reference label generating process will be described in detail.

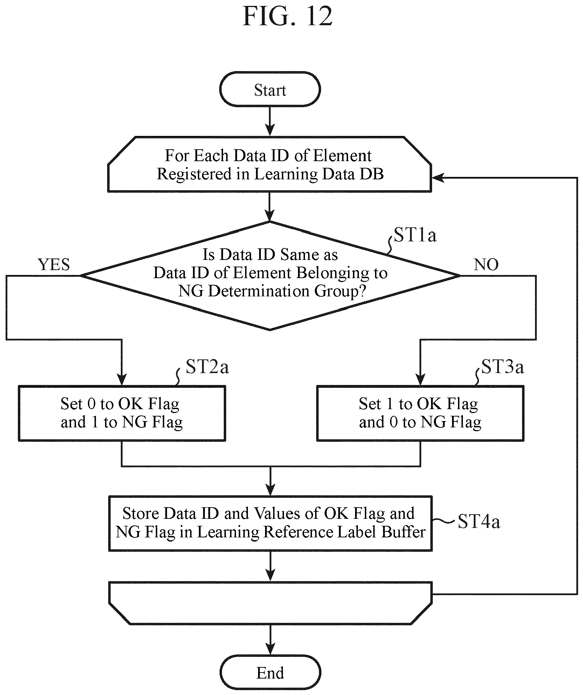

FIG. 12 is a flowchart illustrating the learning reference label generating process, and illustrates a process for generating initial values of the learning reference label.

The learning reference label generating unit 10b sequentially reads a data ID of each element of the learning data registered in the learning data DB 2 and executes the following processes.

The learning reference label generating unit 10b determines whether or not, among the data IDs of the elements read from the learning data DB 2, there is a data ID same as a data ID of an element belonging to the NG determination group registered in the NG determination group DB 3 (step ST1a).

If it is determined that the data ID of a target element is the same as a data ID of an element belonging to the NG determination group (step ST1a: YES), the learning reference label generating unit 10b sets value 0 to the OK flag corresponding to the target element and value 1 to the NG flag corresponding thereto (step ST2a). On the other hand, if it is determined that the data ID of a target element is different from the data IDs of the elements belonging to the NG determination group (step ST1a: NO), the learning reference label generating unit 10b sets value 1 to the OK flag corresponding to the target element and value 0 to the NG flag corresponding thereto (step ST3a).

Having set values in the OK flag and the NG flag corresponding to the target element, the learning reference label generating unit 10b stores the data ID and the values of the OK flag and the NG flag of the target element in the learning reference label buffer 10a (step ST4a).

The learning reference label generating unit 10b repeatedly executes the series of processes from step ST1a to step ST4a for all the elements of the learning data registered in the learning data DB 2. By the processes, initial values of the learning reference labels are generated.

Next, a neural network managing process will be described in detail.

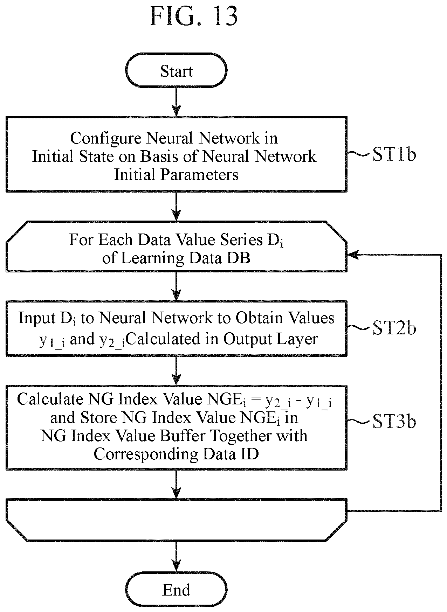

FIG. 13 is a flowchart illustrating the neural network managing process, and illustrates a process of calculating an NG index value for each element.

In the initial process, the neural network managing unit 10c configures an initial state neural network on the basis of the neural network initial parameters (step ST1b).

Next, the neural network managing unit 10c inputs the elements of the learning data read from the learning data DB 2 (data value series Dᵢ) to the neural network, and obtains output values y_{1_i} and y_{2_i} calculated in the output layer (step ST2b). As described above, the output value y_{1_i} represents the degree to which the element belongs to the OK class, and the output value y_{2_i} indicates the degree to which the element belongs to the NG class. An element (data value series Dᵢ) input to the neural network is determined to belong to the OK class when y_{1_i} > y_{2_i} holds, and is determined to belong to the NG class when yi_i ≤ y_{2_i} holds. The neural network managing unit 10c performs error evaluation on the determined class and the learning reference label.

In step ST3b, the neural network managing unit 10c calculates y_{2_i} - y_{1_i} as an NG index value NGEᵢ and stores the calculated NG index value NGEᵢ in the NG index value buffer 10e together with the data ID of the corresponding element.

Note that although y_{2_i} - y_{1_i} is used as NGEᵢ, the ratio of y_{1_i} and y_{2_i} may be used as NGEᵢ, or a distance considering the distribution of y_{1_i} and y_{2_i} may be used as NGEᵢ.

The neural network managing unit 10c repeatedly executes the series of processes from step ST2b to step ST3b for all the elements of the learning data registered in the learning data DB 2.

Next, a history managing process of NG index values will be described in detail.

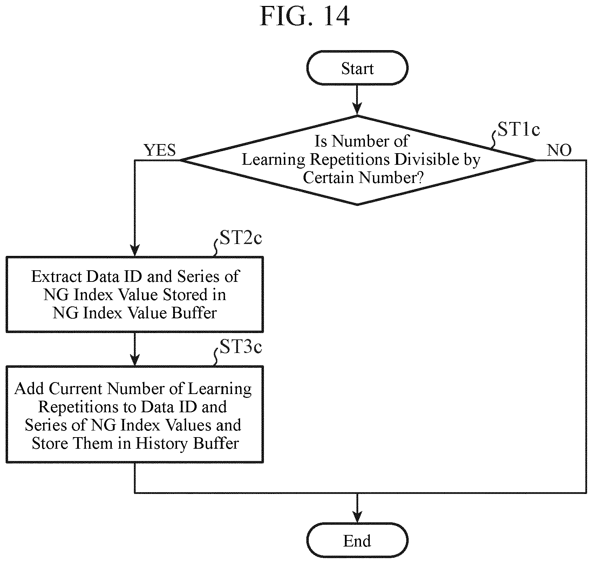

FIG. 14 is a flowchart illustrating the history managing process of NG index values.

First, the history managing unit 11c determines whether or not the number of learning repetitions is divisible by a certain number (for example, 100) (step ST1c). The number of learning repetitions is the number of times that the series of processes by the learning unit 10 from step ST2 to step ST4 illustrated in FIG. 11 is repetitively performed.

If it is determined that the number of learning repetitions is divisible by a certain number (step ST1c: YES), the history managing unit 11c extracts a data ID and a series of NG index values of elements corresponding to the data ID from the NG index value buffer 10e (step ST2c).

Next, the history managing unit 11c adds the current number of learning repetitions to the extracted data ID and the series of NG index values and stores them in the history buffer 11a (step ST3c).

Then the history managing unit 11c terminates the process of FIG. 14 and proceeds to the process of the test unit 11d.

On the other hand, if it is determined that the number of learning repetitions is not divisible by a certain number (step ST1c: NO), the history managing unit 11c terminates the process of FIG. 14, and proceeds to the process of the neural network updating unit 10d.

Next, a statistical test process of NG index values will be described in detail.

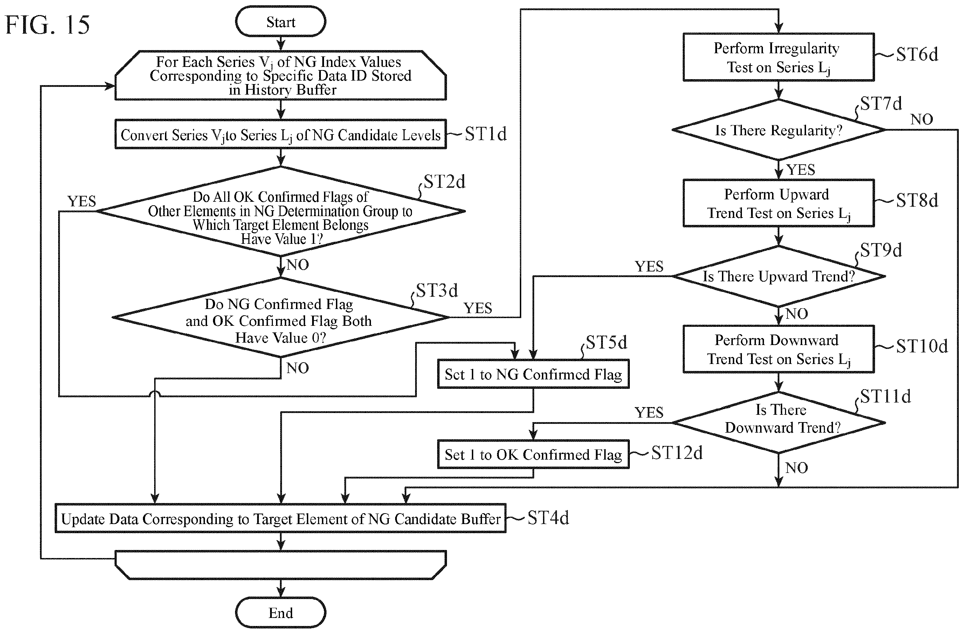

FIG. 15 is a flowchart illustrating a statistical test process of NG index values.

The test unit 11d extracts, from the history buffer 11a, a series Vⱼ of NG index values for each number of learning repetitions that correspond to the data ID of a j-th element (target element), and converts the extracted series Vⱼ of NG index values to a series Lⱼ of NG candidate levels (step ST1d). The series Lⱼ is determined by what number of a range, obtained by equally dividing the range of the past values of the series Vⱼ by a certain number, the current NG index value belongs to.

For example in a case where the range of past values of the series Vⱼ of NG index values is equally divided into five ranges, NG candidate levels are assigned as -2, -1, 0, +1, and +2 as illustrated in FIG. 9.

NG candidate level 0 corresponds to the middle range of the past NG index values. NG candidate level +1 corresponds to a range where the NG index value is larger than in the middle range, and NG candidate level +2 corresponds to a range where the NG index value is larger than in the range corresponding to NG candidate level +1. NG candidate level -1 corresponds to a range where the NG index value is smaller than in the middle range, and NG candidate level -2 corresponds to a range where the NG index value is smaller than in the range corresponding to NG candidate level -1.

Note that initially there is only one NG index value, and thus the range of past values of the series Vⱼ is 0. The NG candidate level at this point is set to 0.

The test unit 11d determines whether or not value 1 is set in the OK confirmed flags corresponding to all elements other than the target element, among the elements belonging to the NG determination group to which the target element (NG candidate) belongs (step ST2d). At this point, if value 0 is set in the OK confirmed flag corresponding to any one of the elements (step ST2d: NO), the test unit 11d refers to the NG candidate buffer 11b and confirms whether or not value 0 is set in both the NG confirmed flag and the OK confirmed flag corresponding to the target element (step ST3d).

If value 1 is set in the NG confirmed flag or the OK confirmed flag (step ST3d: NO), the test unit 11d updates the data corresponding to the target element in the NG candidate buffer 1 1b with the current number of learning repetitions, the current NG candidate level of the target element, and the values of the current OK confirmed flag and NG confirmed flag of the target element (step ST4d).

Then, the test unit 11d continues to extract a series Vⱼ + i of NG index values corresponding to the data ID of the (j + 1) th element from the history buffer 11a, and repeats the processes from step ST1d.

Of the elements belonging to the NG determination group to which the target element belongs, if value 1 is set in OK confirmed flags corresponding to all elements other than the target element (step ST2d: YES), the test unit 11d determines the value to be set in the NG confirmed flag corresponding to the target element, to be "1" (step ST5d). Then, the test unit 11d proceeds to the process of step ST4d and sets value 1 to the NG confirmed flag corresponding to the target element in the NG candidate buffer 11b to be updated.

If value 0 is set in both the NG confirmed flag and the OK confirmed flag corresponding to the target element (step ST3d: YES), the test unit 11d performs an irregularity test based on a certain reliability coefficient (for example, 0.95) on the series Lⱼ of NG candidate levels (step ST6d). The test unit 11d determines whether or not the series Lⱼ of NG candidate levels has regularity, on the basis of the result of the irregularity test on the series Lⱼ of NG candidate levels (step ST7d).

If regularity is not confirmed in the series Lⱼ of NG candidate levels, and it is determined that the change trend of the NG index values randomly changes each time learning is repeated (step ST7d: NO), the test unit 11d does not confirm the target element to be OK nor NG. Thereafter, the test unit 11d proceeds to the process of step ST4d.

If it is determined that the change trend of the NG index values is regular for each repetition of learning after regularity is confirmed in the series Lⱼ of NG candidate levels (step ST7d: YES), the test unit 11d performs an upward trend test on the series Lⱼ of NG candidate levels (step ST8d). The test unit 11d determines whether or not the series Lⱼ of NG candidate levels has an upward trend, on the basis of the result of the trend test on the series Lⱼ of NG candidate levels (step ST9d).

If the series Lⱼ of NG candidate levels has an upward trend (step ST9d: YES), the test unit 11d determines that the NG index value increases each time learning is repeated, and proceeds to the process of step ST5d. As a result, a value to be set in the NG confirmed flag corresponding to the target element is determined to be "1", and NG is confirmed.

On the other hand, if no upward trend is confirmed in the series Lⱼ of NG candidate levels (step ST9d: NO), the test unit 11d performs a downward trend test on the series Lⱼ of NG candidate levels (step ST10d). The test unit 11d determines whether or not the series Lⱼ of NG candidate levels has a downward trend, on the basis of the result of the trend test on the series Lⱼ of NG candidate levels (step ST11d).

If no downward trend is confirmed in the series Lⱼ of NG candidate levels (step ST11d: NO), the test unit 11d proceeds to the process of step ST4d and determines the value of the series Lⱼ to be the current NG candidate level, which is caused to be reflected in the NG candidate buffer 11b.

When a downward trend is confirmed in the series Lⱼ of NG candidate levels (step ST11d: YES), the test unit 11d determines that the NG index value becomes smaller each time learning is repeated, and determines a value to be set in the OK confirmed flag corresponding to the target element to be "1" (step ST12d). Then, the test unit 11d proceeds to the process of step ST4d and sets value 1 to the OK confirmed flag corresponding to the target element in the NG candidate buffer 11b to be updated.

Next, a learning reference label updating process will be described in detail.

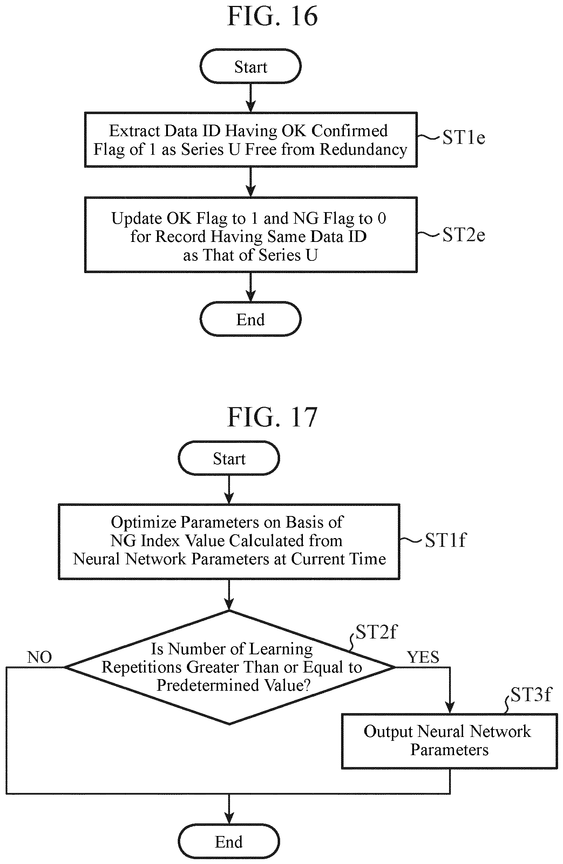

FIG. 16 is a flowchart illustrating the learning reference label updating process.

The learning reference label updating unit 11e extracts, from the NG candidate buffer 11b, a data ID of an element having the OK confirmed flag set to value 1, as a series U free from redundancy (step ST1e). The series U includes the data ID of the element having the OK confirmed flag set to value 1.

Next, the learning reference label updating unit 11e specifies a record having the same data ID as the data ID included in the series U in the learning reference label buffer 10a, and updates the learning reference label so that the OK flag has value 1 and the NG flag has value 0 for the specified record (step ST2e). Since this process is executed during the learning of the neural network by the learning unit 10, the learning reference label is dynamically updated.

Next, a neural network parameter updating process will be described in detail.

FIG. 17 is a flowchart illustrating the neural network parameter updating process.

The neural network updating unit 10d extracts, from the NG index value buffer 10e, an NG index value calculated from the output result of the neural network configured by the current neural network parameters by the neural network managing unit 10c.

On the basis of the NG index value extracted from the NG index value buffer 10e, the neural network updating unit 10d optimizes the neural network parameters (step ST1f). For example, on the basis of the NG index value extracted from the NG index value buffer 10e, the neural network updating unit 10d optimizes the current neural network parameters using the gradient descent optimization method described in Reference Literature 1. This optimization is performed sequentially each time learning is repeated.

Subsequently, the neural network updating unit 10d determines whether or not the number of learning repetitions has reached or exceeded a predetermined value (for example, 10000) (step ST2f).

If the number of learning repetitions is less than the predetermined value (step ST2f: NO), the neural network updating unit 10d terminates the process in FIG. 17 and proceeds to the process from the step ST2 in FIG. 11 by the neural network managing unit 10c.

On the other hand, if the number of learning repetitions is greater than or equal to the predetermined value (step ST2f: YES), the neural network updating unit 10d outputs the neural network parameters at that time, as a learning result (step ST3f). The neural network configured using the neural network parameters of the learning result functions as a classifier that determines at least one piece of the data belonging to the NG determination group to be NG.

Next, a classifier obtained by the learning device 1 according to the first embodiment will be described.

Here, let us consider a situation where there is a history that a group (group of cases) has been determined to be NG as a whole; however, it is unknown which element in the group is NG, for example, a situation where there are three groups of which two groups each have been determined to be NG as a whole and the remaining one group has been determined to be OK as a whole. One of the groups determined to be NG is defined as an NG determination group (1) f E11 (OK), E12 (NG), E13 (OK)}, and the other is determined as an NG determination group (2) {E21 (NG), E22 (OK), E23 (OK)}. The group determined to be OK is defined as an OK determination group (3) {E31 (OK), E32 (OK), E33 (OK)}.

In the NG determination group (1), only the second element is NG, and the remaining elements are OK. Meanwhile in the NG determination group (2), only the first element is NG, and the remaining elements are OK. However, since these groups include NG elements, each of the groups is determined to be NG as a whole. Although OK or NG for each element is illustrated inside parentheses of the corresponding element E, OK and NG for each element is unknown at a stage in which the three groups are handled as learning data.

Only the determination result of OK or NG for the entire group is known at the learning stage of the classifier. Therefore, when each of the elements is classified as OK or NG, all of the six elements E11 (OK), E12 (NG), E13 (OK), E21 (NG), E22 (OK), and E23 (OK) are regarded as NG and thereby learned at the learning stage of the classifier. That is, four of these elements are incorrectly learned as NG despite the fact that the elements are originally OK. As a result, the classification accuracy of the classifier as the learning result is deteriorated.

For example in a case where OK or NG is determined for group (4) {E41 (OK), E42 (OK), E43 (OK)} and group (5) {E51 (OK), E52 (OK), E53 (NG)}, an element that is originally OK is incorrectly learned as NG in a conventional classifier, and thus there is a possibility that any one of the elements belonging to group (4) is determined as NG. If any one of the elements belonging to group (4) is determined to be NG, disadvantageously, the entire group (4) is also determined to be NG. As described above, conventional classifiers have low classification accuracy for each element and low classification accuracy for each group.

Meanwhile, in the learning device 1 according to the first embodiment, a learning reference label, obtained by assigning an OK label or an NG label to each element, is updated on the basis of a result of a statistical test on the change trend of NG index values. As a result, it is rare for the learning unit 10 to incorrectly learn an element that is originally OK as NG, and thus the learning unit 10 can learn a classifier that performs highly accurate classification.

In addition, since the classifier as the learning result determines at least one piece of data belonging to the NG determination group to be NG, if group (5) is an NG determination group, group (5) is appropriately determined to be NG, whereas group (4) is determined to be OK.

As described above, the learning device 1 according to the first embodiment includes the learning unit 10 and the dynamic update unit 11. The learning unit 10 learns a neural network by inputting the multiple elements of the learning data and using a learning reference label, and thereby outputs a classifier for determining at least one piece of the data belonging to the group to be NG using the neural network as the learning result. The dynamic update unit 11 dynamically updates the learning reference label while the learning unit 10 learns the neural network. In this configuration, the learning unit 10 repetitively learns the neural network by sequentially using the learning reference label updated from the initial value of the learning reference label by the dynamic update unit 11, and calculates an NG index value corresponding to an element of the learning data using an output value of the neural network for each repetition of learning. The dynamic update unit 11 updates the learning reference label on the basis of a result obtained by statistically testing a change trend of the NG index value obtained for each transition of the number of learning repetitions. Since the classifier as the learning result determines that at least one piece of the data belonging to the group is NG, the learning device 1 can provide a classifier that performs highly accurate classification.

### REFERENCE SIGNS LIST

1: learning device, 2: learning data DB, 3: NG determination group DB, 10: learning unit, 10a: learning reference label buffer, 10b: learning reference label generating unit, 10c: neural network managing unit, 10d: neural network updating unit, 10e: NG index value buffer, 11: dynamic update unit, 11a: history buffer, 11b: NG candidate buffer, 11c: history managing unit, 11d: test unit, 11e: learning reference label updating unit, 100: information input interface, 101: DB input/output interface, 102: database, 103: information output interface, 104: processing circuit, 105: processor, 106: memory

## Claims

1. A learning device (1) for performing abnormality detection on image data comprising:
a learning unit (10) for inputting learning data, which is image data, including multiple elements, wherein individual image areas obtained by dividing an image indicated by the image data into multiple pieces are the elements, and group information in which it is defined that at least one piece of data belonging to a group is determined to be abnormal (NG), and learning a neural network by inputting the multiple elements of the learning data and using a learning reference label assigned with a normal (OK) label or an NG label for each of the elements of the learning data, thereby outputting a classifier for determining the at least one piece of data belonging to the group to be NG using the neural network which is a result of the learning; and
a dynamic update unit (11) for dynamically updating the learning reference label during learning of the neural network by the learning unit,
wherein the learning unit:
generates an initial value of the learning reference label for each of the elements of the learning data by using the learning data and the group information;
repetitively learns the neural network, by sequentially using the learning reference label updated from the initial value of the learning reference label by the dynamic update unit; and
calculates an NG index value with which each of the elements of the learning data can be NG, by using an output value of the neural network for each repetition of learning, and
the dynamic update unit updates the learning reference label, on a basis of a result obtained by statistically testing a change trend of the NG index value obtained for each transition of the number of learning repetitions;
wherein the learning unit (10) comprises:
a learning reference label buffer (10a) for storing the learning reference label for each of the elements of the learning data;
a learning reference label generating unit (10b) for generating an initial value of the learning reference label, the initial value being obtained by, in a case where each of the elements of the learning data does not belong to the group, assigning an OK label to a corresponding one of the elements, and in a case where each of the elements belongs to the group, assigning an NG label to a corresponding one of the elements;
a neural network managing unit (10c) for calculating the NG index value of each of the elements of the learning data using an output value of the neural network, determining, out of an OK class and an NG class, a class to which each of the elements of the learning data belongs on a basis of the NG index value, and performing an error evaluation on the initial value of the learning reference label, the learning reference label updated by the dynamic update unit, and the determined class; and
a neural network updating unit (10d) for updating neural network parameters on a basis of the NG index value calculated by the neural network managing unit;
wherein the neural network includes an input layer, a hidden layer, and an output layer, a data value series x₁, x₂,..., x_{N} included in an element of learning data is input to the input layer, data values z₁, z₂,..., z_{M} are calculated by nonlinear transformation of the multiplication sum of weight parameters between the input layer nodes and the hidden layer nodes and x₁, x₂,..., x_{N}, data values y₁ and y₂ obtained by nonlinearly transforming the multiplication sum of weight parameters between the hidden layer nodes and the output layer nodes and z₁, z₂,..., z_{M} are output from the output layer;
wherein the output values y₁ and y₂ are NG evaluation values for each class, with the output value y₁ representing the degree to which the element belongs to the OK class, and the output value y₂ representing the degree to which the element belongs to the NG class; and
wherein y₂ - y₁ is the NG index value;
wherein the dynamic update unit (11) comprises:
a history buffer (11a) for storing the NG index value obtained for each number of learning repetitions;
an NG candidate buffer (11b) for storing, for each of the elements of the learning data, the number of learning repetitions, an NG candidate level corresponding to the NG index value, an OK confirmed flag indicating that a corresponding one of the elements of the learning data is confirmed to be OK, and an NG confirmed flag indicating that a corresponding one of the elements of the learning data is confirmed to be NG;
a history managing unit (11c) for storing the NG index value obtained for each repetition of learning in the history buffer;
a test unit (11d) for statistically testing a change trend of the NG index value stored in the history buffer by using transition of the NG candidate level, confirming OK or NG on one or more NG candidate elements of the elements on a basis of a result of the test, and updating the OK confirmed flag or the NG confirmed flag corresponding to each of the NG candidate elements in the NG candidate buffer; and
a learning reference label updating unit (11e) for updating, from an NG label to an OK label, the learning reference label corresponding to an element confirmed to be OK by the test unit, out of the NG candidate elements.

2. A learning method implemented by a learning device, wherein said learning device comprises a learning unit (10) and a dynamic update unit (11), said learning method for performing abnormality detection on image data, said learning method comprising the steps of:
inputting, by the learning unit (10), learning data, which is image data, including multiple elements, wherein individual image areas obtained by dividing an image indicated by the image data into multiple pieces are the elements, and group information in which it is defined that at least one piece of data belonging to a group is determined to be abnormal (NG), and learning a neural network by inputting the multiple elements of the learning data and using a learning reference label assigned with an normal (OK) label or an NG label for each of the elements of the learning data, thereby outputting a classifier for determining the at least one piece of data belonging to the group to be NG using the neural network which is a result of the learning; and
dynamically updating, by the dynamic update unit (11), the learning reference label during learning of the neural network by the learning unit,
wherein the learning unit:
generates an initial value of the learning reference label for each of the elements of the learning data by using the learning data and the group information;
repetitively learns the neural network, by sequentially using the learning reference label updated from the initial value of the learning reference label by the dynamic update unit; and
calculates an NG index value with which each of the elements of the learning data can be NG, by using an output value of the neural network for each repetition of learning, and
the dynamic update unit updates the learning reference label, on a basis of a result obtained by statistically testing a change trend of the NG index value obtained for each transition of the number of learning repetitions;
wherein the learning unit comprises a learning reference label buffer (10a), a learning reference label generating unit (10b), a neural network managing unit (10c), and a neural network updating unit (10d);
the learning reference label buffer (10a) stores the learning reference label for each of the elements of the learning data;
the learning reference label generating unit (10b) generates an initial value of the learning reference label, the initial value being obtained by, in a case where each of the elements of the learning data does not belong to the group, assigning an OK label to a corresponding one of the elements, and in a case where each of the elements belongs to the group, assigning an NG label to a corresponding one of the elements;
the neural network managing unit (10c) calculates the NG index value of each of the elements of the learning data using an output value of the neural network, determining, out of an OK class and an NG class, a class to which each of the elements of the learning data belongs on a basis of the NG index value, and performing an error evaluation on the initial value of the learning reference label, the learning reference label updated by the dynamic update unit, and the determined class; and
the neural network updating unit (10d) updates neural network parameters on a basis of the NG index value calculated by the neural network managing unit;
wherein the neural network includes an input layer, a hidden layer, and an output layer, a data value series x₁, x₂,..., x_{N} included in an element of learning data is input to the input layer, data values z₁, z₂,..., z_{M} are calculated by nonlinear transformation of the multiplication sum of weight parameters between the input layer nodes and the hidden layer nodes and x₁, x₂,..., x_{N}, data values y₁ and y₂ obtained by nonlinearly transforming the multiplication sum of weight parameters between the hidden layer nodes and the output layer nodes and z₁, z₂,..., z_{M} are output from the output layer;
wherein the output values y₁ and y₂ are NG evaluation values for each class, with the output value y₁ representing the degree to which the element belongs to the OK class, and the output value y₂ representing the degree to which the element belongs to the NG class; and
wherein y₂ - y₁ is the NG index value;
wherein the dynamic update unit (11) comprises: a history buffer (11a), an NG candidate buffer (11b), a history managing unit (11c), a test unit (11d), and a learning reference label updating unit (11e);
the history buffer (11a) stores the NG index value obtained for each number of learning repetitions;
the NG candidate buffer (11b) stores, for each of the elements of the learning data, the number of learning repetitions, an NG candidate level corresponding to the NG index value, an OK confirmed flag indicating that a corresponding one of the elements of the learning data is confirmed to be OK, and an NG confirmed flag indicating that a corresponding one of the elements of the learning data is confirmed to be NG;
the history managing unit (11c) stores the NG index value obtained for each repetition of learning in the history buffer;
the test unit (11d) statistically tests a change trend of the NG index value stored in the history buffer by using transition of the NG candidate level, confirms OK or NG on one or more NG candidate elements of the elements on a basis of a result of the test, and updating the OK confirmed flag or the NG confirmed flag corresponding to each of the NG candidate elements in the NG candidate buffer; and
the learning reference label updating unit (11e) updates, from an NG label to an OK label, the learning reference label corresponding to an element confirmed to be OK by the test unit, out of the NG candidate elements.

## Patentansprüche

1. Lerneinrichtung (1) zum Durchführen einer Anomalie-Detektion auf Bilddaten, aufweisend:
eine Lerneinheit (10) zum Eingeben von Lerndaten, welche Bilddaten sind, enthaltend mehrere Elemente, wobei einzelne Bildbereiche, die durch Aufteilen eines durch die Bilddaten angezeigten Bildes in mehrere Stücke erhalten werden, die Elemente sind, und Gruppeninformationen, in welchen definiert ist, dass zumindest ein Datenstück, das zu einer Gruppe gehört, als anomal (NG) bestimmt ist, und Lernen eines neuronalen Netzes durch Eingeben der mehreren Elemente der Lerndaten und Verwenden eines Lernreferenzlabels, dem ein Normal-(OK)-Label oder ein NG-Label für jedes der Elemente der Lerndaten zugewiesen ist, wodurch ein Klassifizierer zum Bestimmen des zumindest einen zu der Gruppe gehörenden Datenstücks als NG unter Verwendung des neuronalen Netzes, das ein Ergebnis des Lernens ist, ausgegeben wird; und
eine Dynamische-Aktualisierung-Einheit (11) zum dynamischen Aktualisieren des Lernreferenzlabels während des Lernens des neuronalen Netzes durch die Lerneinheit,
wobei die Lerneinheit:
einen Anfangswert des Lernreferenzlabels für jedes der Elemente der Lerndaten unter Verwendung der Lerndaten und der Gruppeninformationen generiert;
das neuronale Netz wiederholt lernt, durch sequentielles Verwenden das Lernreferenzlabels, das von dem Anfangswert des Lernreferenzlabels durch die Dynamische-Aktualisierung-Einheit aktualisiert wird; und
einen NG-Indexwert berechnet, mit welchem jedes der Elemente der Lerndaten NG sein kann, unter Verwendung eines Ausgabewerts des neuronalen Netzes für jede Wiederholung des Lernens, und
die Dynamische-Aktualisierung-Einheit das Lernreferenzlabel auf der Grundlage eines Ergebnisses aktualisiert, das durch statistisches Testen eines Änderungstrends des NG-Indexwerts erhalten wird, der für jede Transition der Anzahl von Lernwiederholungen erhalten wird;
wobei die Lerneinheit (10) aufweist:
einen Lernreferenzlabelpuffer (10a) zum Speichern des Lernreferenzlabels für jedes der Elemente der Lerndaten;
eine Lernreferenzlabel-Generierungseinheit (10b) zum Generieren eines Anfangswerts des Lernreferenzlabels, wobei der Anfangswert dadurch erhalten wird, dass in einem Fall, in dem jedes der Elemente der Lerndaten nicht zu der Gruppe gehört, einem entsprechenden der Elemente ein OK-Label zugewiesen wird, und in einem Fall, in dem jedes der Elemente zu der Gruppe gehört, einem entsprechenden der Elemente ein NG-Label zugewiesen wird;
eine Neuronales-Netz-Verwaltungseinheit (10c) zum Berechnen des NG-Indexwerts jedes der Elemente der Lerndaten unter Verwendung eines Ausgabewerts des neuronalen Netzes, Bestimmen, aus einer OK-Klasse und einer NG-Klasse, einer Klasse, zu der jedes der Elemente der Lerndaten gehört, auf der Grundlage des NG-Indexwerts, und Durchführen einer Fehlerbewertung auf den Anfangswert des Lernreferenzlabels, das durch die Dynamische-Aktualisierung-Einheit aktualisierten Lernreferenzlabels und die bestimmte Klasse; und
eine Neuronales-Netz-Aktualisierungseinheit (10d) zum Aktualisieren von Neuronales-Netz-Parametern auf der Grundlage des von der Neuronales-Netz-Verwaltungseinheit berechneten NG-Indexwerts;
wobei das neuronale Netz eine Eingabeschicht, eine verborgene Schicht und eine Ausgabeschicht enthält, eine Datenwertreihe x₁, x₂,..., x_{N}, die in einem Element von Lerndaten enthalten ist, in die Eingabeschicht eingegeben wird, Datenwerte z₁, z₂,..., z_{M} durch nichtlineare Transformation der Multiplikationssumme von Gewichtsparametern zwischen den Knoten der Eingabeschicht und den Knoten der verborgenen Schicht und x₁, x₂,..., x_{N} berechnet werden, Datenwerte y₁ und y₂, welche durch nichtlineare Transformation der Multiplikationssumme von Gewichtsparametern zwischen den Knoten der verborgenen Schicht und den Knoten der Ausgabeschicht und z₁, z₂,..., z_{M} erhalten werden, von der Ausgabeschicht ausgegeben werden;
wobei die Ausgabewerte y₁ und y₂ NG-Bewertungswerte für jede Klasse sind, wobei der Ausgabewert y₁ den Grad der Zugehörigkeit des Elements zur OK-Klasse darstellt, und der Ausgabewert y₂ den Grad der Zugehörigkeit des Elements zur NG-Klasse darstellt; und
wobei y₂ - y₁ der NG-Indexwert ist;
wobei die Dynamische-Aktualisierung-Einheit (11) aufweist:
einen Historienpuffer (11a) zum Speichern des für jede Anzahl von Lernwiederholungen erhaltenen NG-Indexwerts;
einen NG-Kandidatenpuffer (11b) zum Speichern, für jedes der Elemente der Lerndaten, der Anzahl von Lernwiederholungen, eines NG-Kandidatenniveaus, das dem NG-Indexwert entspricht, eines OK-Bestätigungsflags, das anzeigt, dass ein entsprechendes der Elemente der Lerndaten als OK bestätigt ist, und eines NG-Bestätigungsflags, das anzeigt, dass ein entsprechendes der Elemente der Lerndaten als NG bestätigt ist;
eine Historienverwaltungseinheit (11c) zum Speichern des NG-Indexwerts, der für jede Wiederholung des Lernens erhalten wurde, im Historienpuffer;
eine Testeinheit (11d) zum statistischen Testen eines Änderungstrends des NG-Indexwerts, der in dem Historienpuffer gespeichert ist, unter Verwendung einer Transition des NG-Kandidatenniveaus, Bestätigen von OK oder NG für ein oder mehrere NG-Kandidatenelementen der Elemente auf der Grundlage eines Ergebnisses des Tests, und Aktualisieren des OK-Bestätigungsflags oder des NG-Bestätigungsflags entsprechend jedem der NG-Kandidatenelemente in dem NG-Kandidatenpuffer; und
eine Lernreferenzlabel-Aktualisierungseinheit (11e) zum Aktualisieren, von einem NG-Label zu einem OK-Label, des Lernreferenzlabels entsprechend einem Element, das von der Testeinheit als OK bestätigt wurde, aus den NG-Kandidatenelementen.

2. Lernverfahren, das durch eine Lerneinrichtung implementiert wird, wobei die Lerneinrichtung eine Lerneinheit (10) und eine Dynamische-Aktualisierung-Einheit (11) umfasst, wobei das Lernverfahren zum Durchführen einer Anomalie-Detektion auf Bilddaten dient, wobei das Lernverfahren die Schritte aufweist:
Eingeben, durch die Lerneinheit (10), von Lerndaten, welche Bilddaten sind, die mehrere Elemente enthalten, wobei einzelne Bildbereiche, die durch Aufteilen eines durch die Bilddaten angezeigten Bildes in mehrere Stücke erhalten werden, die Elemente sind, und Gruppeninformationen, in welchen definiert ist, dass zumindest ein Datenstück, das zu einer Gruppe gehört, als anomal (NG) bestimmt ist, und Lernen eines neuronalen Netzes durch Eingeben der mehreren Elemente der Lerndaten und Verwenden eines Lernreferenzlabels, dem ein Normal-(OK)-Label oder ein NG-Label für jedes der Elemente der Lerndaten zugewiesen ist, wodurch ein Klassifizierer zum Bestimmen des zumindest einen zu der Gruppe gehörenden Datenstücks als NG unter Verwendung des neuronalen Netzes, das ein Ergebnis des Lernens ist, ausgegeben wird; und
dynamisches Aktualisieren, durch die Dynamische-Aktualisierung-Einheit (11), des Lernreferenzlabels während des Lernens des neuronalen Netzes durch die Lerneinheit,
wobei die Lerneinheit:
einen Anfangswert des Lernreferenzlabels für jedes der Elemente der Lerndaten unter Verwendung der Lerndaten und der Gruppeninformationen generiert;
das neuronale Netz wiederholt lernt, durch sequentielles Verwenden das Lernreferenzlabels, das von dem Anfangswert des Lernreferenzlabels durch die Dynamische-Aktualisierung-Einheit aktualisiert wird; und
einen NG-Indexwert berechnet, mit welchem jedes der Elemente der Lerndaten NG sein kann, unter Verwendung eines Ausgabewerts des neuronalen Netzes für jede Wiederholung des Lernens, und
die Dynamische-Aktualisierung-Einheit das Lernreferenzlabel auf der Grundlage eines Ergebnisses aktualisiert, das durch statistisches Testen eines Änderungstrends des NG-Indexwerts erhalten wird, der für jede Transition der Anzahl von Lernwiederholungen erhalten wird;
wobei die Lerneinheit einen Lernreferenzlabelpuffer (10a), eine Lernreferenzlabel-Generierungseinheit (10b), eine Neuronale-Netz-Verwaltungseinheit (10c) und eine Neuronales-Netz-Aktualisierungseinheit (10d) aufweist;
der Lernreferenzlabelpuffer (10a) das Lernreferenzlabel für jedes der Elemente der Lerndaten speichert;
die Lernreferenzlabel-Generierungseinheit (10b) einen Anfangswert des Lernreferenzlabels generiert, wobei der Anfangswert dadurch erhalten wird, dass in einem Fall, in dem jedes der Elemente der Lerndaten nicht zu der Gruppe gehört, einem entsprechenden der Elemente ein OK-Label zugewiesen wird, und in einem Fall, in dem jedes der Elemente zu der Gruppe gehört, einem entsprechenden der Elemente ein NG-Label zugewiesen wird;
die Neuronales-Netz-Verwaltungseinheit (10c) den NG-Indexwert jedes der Elemente der Lerndaten unter Verwendung eines Ausgabewerts des neuronalen Netzes berechnet, aus einer OK-Klasse und einer NG-Klasse eine Klasse, zu der jedes der Elemente der Lerndaten gehört, auf der Grundlage des NG-Indexwerts bestimmt, und eine Fehlerbewertung auf den Anfangswert des Lernreferenzlabels, des durch die Dynamische-Aktualisierung-Einheit aktualisierten Lernreferenzlabels und die bestimmte Klasse durchführt; und
die Neuronales-Netz-Aktualisierungseinheit (10d) Neuronales-Netz-Parametern auf der Grundlage des von der Neuronales-Netz-Verwaltungseinheit berechneten NG-Indexwerts aktualisiert;
wobei das neuronale Netz eine Eingabeschicht, eine verborgene Schicht und eine Ausgabeschicht enthält, eine Datenwertreihe x₁, x₂,..., x_{N}, die in einem Element von Lerndaten enthalten ist, in die Eingabeschicht eingegeben wird, Datenwerte z₁, z₂,..., z_{M} durch nichtlineare Transformation der Multiplikationssumme von Gewichtsparametern zwischen den Knoten der Eingabeschicht und den Knoten der verborgenen Schicht und x₁, x₂,..., x_{N} berechnet werden, Datenwerte y₁ und y₂, welche durch nichtlineare Transformation der Multiplikationssumme von Gewichtsparametern zwischen den Knoten der verborgenen Schicht und den Knoten der Ausgabeschicht und z₁, z₂,..., z_{M} erhalten werden, von der Ausgabeschicht ausgegeben werden;
wobei die Ausgabewerte y₁ und y₂ NG-Bewertungswerte für jede Klasse sind, wobei der Ausgabewert y₁ den Grad der Zugehörigkeit des Elements zur OK-Klasse darstellt, und der Ausgabewert y₂ den Grad der Zugehörigkeit des Elements zur NG-Klasse darstellt; und
wobei y₂ - y₁ der NG-Indexwert ist;
wobei die Dynamische-Aktualisierung-Einheit (11) aufweist: einen Historienpuffer (11a), einen NG-Kandidatenpuffer (11b), eine Historienverwaltungseinheit (11c), eine Testeinheit (11d) und eine Lernreferenzlabel-Aktualisierungseinheit (11e);
der Historienpuffer (11a) den für jede Anzahl von Lernwiederholungen erhaltenen NG-Indexwert speichert;
der NG-Kandidatenpuffer (11b), für jedes der Elemente der Lerndaten, die Anzahl von Lernwiederholungen, ein NG-Kandidatenniveau, das dem NG-Indexwert entspricht, ein OK-Bestätigungsflag, das anzeigt, dass ein entsprechendes der Elemente der Lerndaten als OK bestätigt ist, und ein NG-Bestätigungsflag, das anzeigt, dass ein entsprechendes der Elemente der Lerndaten als NG bestätigt ist, speichert;
die Historienverwaltungseinheit (11c) den NG-Indexwert, der für jede Wiederholung des Lernens erhalten wurde, im Historienpuffer speichert;
die Testeinheit (11d) einen Änderungstrend des NG-Indexwerts, der in dem Historienpuffer gespeichert ist, statistisch testet, unter Verwendung einer Transition des NG-Kandidatenniveaus, OK oder NG für ein oder mehrere NG-Kandidatenelemente der Elemente auf der Grundlage eines Ergebnisses des Tests bestätigt, und das OK-Bestätigungsflag oder das NG-Bestätigungsflag entsprechend jedem der NG-Kandidatenelemente in dem NG-Kandidatenpuffer aktualisiert; und
die Lernreferenzlabel-Aktualisierungseinheit (11e), von einem NG-Laben zu einem OK-Label, das Lernreferenzlabel, das einem Element entspricht, das durch die Testeinheit als OK bestätigt ist, aus den NG-Kandidatenelementen aktualisiert.

## Revendications

1. Dispositif d'apprentissage (1) pour la détection d'anomalies sur des données d'image comprenant :
une unité d'apprentissage (10) pour l'entrée de données d'apprentissage, qui sont des données d'image, comprenant des éléments multiples, dans lequel les zones d'image individuelles obtenues en divisant une image indiquée par les données d'image en plusieurs morceaux sont les éléments, et des informations de groupe dans lesquelles il est défini qu'au moins un morceau de données appartenant à un groupe est déterminé comme étant anormal (NG), et apprentissage d'un réseau neuronal en entrant les multiples éléments des données d'apprentissage et en utilisant une étiquette de référence d'apprentissage attribuée avec une étiquette normale (OK) ou une étiquette NG pour chacun des éléments des données d'apprentissage, produisant ainsi un classificateur pour déterminer l'au moins un morceau de données appartenant au groupe comme étant NG en utilisant le réseau neuronal qui est le résultat de l'apprentissage ; et
une unité de mise à jour dynamique (11) pour mettre à jour dynamiquement l'étiquette de référence d'apprentissage pendant l'apprentissage du réseau neuronal par l'unité d'apprentissage,
dans lequel l'unité d'apprentissage :
génère une valeur initiale de l'étiquette de référence d'apprentissage pour chacun des éléments des données d'apprentissage en utilisant les données d'apprentissage et les informations de groupe ;
entraîne de manière répétitive le réseau neuronal, en utilisant séquentiellement l'étiquette de référence d'apprentissage mise à jour à partir de la valeur initiale de l'étiquette de référence d'apprentissage par l'unité de mise à jour dynamique ; et
calcule une valeur d'indice NG avec laquelle chacun des éléments des données d'apprentissage peut être NG, en utilisant une valeur de sortie du réseau neuronal pour chaque répétition de l'apprentissage, et
l'unité de mise à jour dynamique met à jour l'étiquette de référence d'apprentissage, sur la base d'un résultat obtenu en testant statistiquement une tendance de changement de la valeur de l'indice NG obtenue pour chaque transition du nombre de répétitions d'apprentissage ;
dans lequel l'unité d'apprentissage (10) comprend :
une mémoire tampon d'étiquettes de référence d'apprentissage (10a) pour stocker l'étiquette de référence d'apprentissage pour chacun des éléments des données d'apprentissage ;
une unité de génération d'étiquette de référence d'apprentissage (10b) pour générer une valeur initiale de l'étiquette de référence d'apprentissage, la valeur initiale étant obtenue, dans le cas où chacun des éléments des données d'apprentissage n'appartient pas au groupe, en attribuant une étiquette OK à l'un des éléments correspondants, et dans le cas où chacun des éléments appartient au groupe, en attribuant une étiquette NG à l'un des éléments correspondants ;
une unité de gestion du réseau neuronal (10c) pour calculer la valeur de l'indice NG de chacun des éléments des données d'apprentissage à l'aide d'une valeur de sortie du réseau neuronal, en déterminant, parmi une classe OK et une classe NG, une classe à laquelle appartient chacun des éléments des données d'apprentissage sur la base de la valeur de l'indice NG, et effectuer une évaluation de l'erreur sur la valeur initiale de l'étiquette de référence d'apprentissage, l'étiquette de référence d'apprentissage mise à jour par l'unité de mise à jour dynamique, et la classe déterminée ; et
une unité de mise à jour du réseau neuronal (10d) pour mettre à jour les paramètres du réseau neuronal sur la base de la valeur de l'indice NG calculée par l'unité de gestion du réseau neuronal ;
dans lequel le réseau neuronal comprend une couche d'entrée, une couche cachée et une couche de sortie, une série de valeurs de données x₁, x₂,..., xₙ incluse dans un élément de données d'apprentissage est introduite dans la couche d'entrée, les valeurs de données z₁, z₂,..., zₘ sont calculées par transformation non linéaire de la somme de multiplication des paramètres de poids entre les noeuds de la couche d'entrée et les noeuds de la couche cachée et x₁, x₂,..., xₙ, les valeurs de données y₁ et y₂ obtenues par transformation non linéaire de la somme de multiplication des paramètres de poids entre les noeuds de la couche cachée et les noeuds de la couche de sortie et z₁, z₂,..., zₘ sont rendues en sortie par la couche de sortie ;
dans lequel les valeurs de sortie y₁ et y₂ sont des valeurs d'évaluation NG pour chaque classe, la valeur de sortie y₁ représentant le degré d'appartenance de l'élément à la classe OK, et la valeur de sortie y₂ représentant le degré d'appartenance de l'élément à la classe NG ; et
dans lequel y₂ - y₁ est la valeur de l'indice NG ;
dans lequel l'unité de mise à jour dynamique (11) comprend :
une mémoire tampon d'historique (11a) pour stocker la valeur de l'indice NG obtenue pour chaque nombre de répétitions d'apprentissage ;
une mémoire tampon de candidats NG (11b) destiné à stocker, pour chacun des éléments des données d'apprentissage, le nombre de répétitions d'apprentissage, un niveau de candidat NG correspondant à la valeur de l'indice NG, un drapeau OK confirmé indiquant qu'un élément correspondant des données d'apprentissage est confirmé comme étant OK, et un drapeau NG confirmé indiquant qu'un élément correspondant des données d'apprentissage est confirmé comme étant NG ;
une unité de gestion d'historique (11c) pour stocker la valeur de l'indice NG obtenue pour chaque répétition de l'apprentissage dans la mémoire tampon d'historique ;
une unité de test (11d) pour tester statistiquement une tendance de changement de la valeur de l'indice NG stockée dans la mémoire tampon d'historique en utilisant la transition du niveau candidat NG, en confirmant OK ou NG sur un ou plusieurs éléments candidats NG des éléments sur la base d'un résultat du test, et en mettant à jour le drapeau OK confirmé ou le drapeau NG confirmé correspondant à chacun des éléments candidats NG dans la mémoire tampon de candidats NG ; et
une unité de mise à jour de l'étiquette de référence d'apprentissage (11e) pour mettre à jour, d'une étiquette NG à une étiquette OK, l'étiquette de référence d'apprentissage correspondant à un élément confirmé comme étant OK par l'unité de test, parmi les éléments candidats NG.

2. Procédé d'apprentissage mis en oeuvre par un dispositif d'apprentissage, dans lequel ledit dispositif d'apprentissage comprend une unité d'apprentissage (10) et une unité de mise à jour dynamique (11), ledit procédé d'apprentissage permettant d'effectuer une détection d'anomalie sur des données d'image, ledit procédé d'apprentissage comprenant les étapes suivantes :
entrer, par l'unité d'apprentissage (10), des données d'apprentissage, qui sont des données d'image, comprenant des éléments multiples, dans lequel les zones d'image individuelles obtenues en divisant une image indiquée par les données d'image en plusieurs morceaux sont les éléments, et des informations de groupe dans lesquelles il est défini qu'au moins un morceau de données appartenant à un groupe est déterminé comme étant anormal (NG), et apprentissage d'un réseau neuronal en entrant les multiples éléments des données d'apprentissage et en utilisant une étiquette de référence d'apprentissage attribuée avec une étiquette normale (OK) ou une étiquette NG pour chacun des éléments des données d'apprentissage, produisant ainsi un classificateur pour déterminer l'au moins un morceau de données appartenant au groupe comme étant NG en utilisant le réseau neuronal qui est le résultat de l'apprentissage ; et
mettre à jour dynamiquement, par l'unité de mise à jour dynamique (11), l'étiquette de référence d'apprentissage pendant l'apprentissage du réseau neuronal par l'unité d'apprentissage,
dans lequel l'unité d'apprentissage :
génère une valeur initiale de l'étiquette de référence d'apprentissage pour chacun des éléments des données d'apprentissage en utilisant les données d'apprentissage et les informations de groupe ;
entraîne de manière répétitive le réseau neuronal, en utilisant séquentiellement l'étiquette de référence d'apprentissage mise à jour à partir de la valeur initiale de l'étiquette de référence d'apprentissage par l'unité de mise à jour dynamique ; et
calcule une valeur d'indice NG avec laquelle chacun des éléments des données d'apprentissage peut être NG, en utilisant une valeur de sortie du réseau neuronal pour chaque répétition de l'apprentissage, et
l'unité de mise à jour dynamique met à jour l'étiquette de référence d'apprentissage, sur la base d'un résultat obtenu en testant statistiquement une tendance de changement de la valeur de l'indice NG obtenue pour chaque transition du nombre de répétitions d'apprentissage ;
dans lequel l'unité d'apprentissage comprend une mémoire tampon d'étiquettes de référence d'apprentissage (10a), une unité de génération d'étiquettes de référence d'apprentissage (10b), une unité de gestion de réseau neuronal (10c) et une unité de mise à jour de réseau neuronal (10d) ;
la mémoire tampon d'étiquettes de référence d'apprentissage (10a) stocke l'étiquette de référence d'apprentissage pour chacun des éléments des données d'apprentissage ;
l'unité de génération d'étiquette de référence d'apprentissage (10b) génère une valeur initiale de l'étiquette de référence d'apprentissage, la valeur initiale étant obtenue, dans le cas où chacun des éléments des données d'apprentissage n'appartient pas au groupe, en attribuant une étiquette OK à l'un des éléments correspondants, et dans le cas où chacun des éléments appartient au groupe, en attribuant une étiquette NG à l'un des éléments correspondants ;
l'unité de gestion du réseau neuronal (10c) calcule la valeur de l'indice NG de chacun des éléments des données d'apprentissage à l'aide d'une valeur de sortie du réseau neuronal, en déterminant, parmi une classe OK et une classe NG, une classe à laquelle appartient chacun des éléments des données d'apprentissage sur la base de la valeur de l'indice NG, et effectuer une évaluation de l'erreur sur la valeur initiale de l'étiquette de référence d'apprentissage, l'étiquette de référence d'apprentissage mise à jour par l'unité de mise à jour dynamique, et la classe déterminée ; et
l'unité de mise à jour du réseau neuronal (10d) met à jour les paramètres du réseau neuronal sur la base de la valeur de l'indice NG calculée par l'unité de gestion du réseau neuronal ;
dans lequel le réseau neuronal comprend une couche d'entrée, une couche cachée et une couche de sortie, une série de valeurs de données x₁, x₂,..., x_{N} incluse dans un élément de données d'apprentissage est introduite dans la couche d'entrée, les valeurs de données z₁, z₂,..., z_{M} sont calculées par transformation non linéaire de la somme de multiplication des paramètres de poids entre les noeuds de la couche d'entrée et les noeuds de la couche cachée et x₁, x₂,..., x_{N}, les valeurs de données y₁ et y₂ obtenues par transformation non linéaire de la somme de multiplication des paramètres de poids entre les noeuds de la couche cachée et les noeuds de la couche de sortie et z₁, z₂,..., z_{M} sont rendues en sortie par la couche de sortie ;
dans lequel les valeurs de sortie y₁ et y₂ sont des valeurs d'évaluation NG pour chaque classe, la valeur de sortie y₁ représentant le degré d'appartenance de l'élément à la classe OK, et la valeur de sortie y₂ représentant le degré d'appartenance de l'élément à la classe NG ; et
dans lequel y₂ - y₁ est la valeur de l'indice NG ;
dans lequel l'unité de mise à jour dynamique (11) comprend : une mémoire tampon d'historique (11a), une mémoire tampon de candidats NG (11b), une unité de gestion d'historique (11c), une unité de test (11d) et une unité de mise à jour de l'étiquette de référence d'apprentissage (11e) ;
la mémoire tampon d'historique (11a) stocke la valeur de l'indice NG obtenue pour chaque nombre de répétitions d'apprentissage ;
la mémoire tampon de candidats NG (11b) stocke, pour chacun des éléments des données d'apprentissage, le nombre de répétitions d'apprentissage, un niveau de candidat NG correspondant à la valeur de l'indice NG, un drapeau OK confirmé indiquant qu'un élément correspondant des données d'apprentissage est confirmé comme étant OK, et un drapeau NG confirmé indiquant qu'un élément correspondant des données d'apprentissage est confirmé comme étant NG ;
l'unité de gestion de l'historique (11c) stocke la valeur de l'indice NG obtenue pour chaque répétition de l'apprentissage dans la mémoire tampon de l'historique ;
l'unité de test (11d) teste statistiquement une tendance de changement de la valeur de l'indice NG stockée dans la mémoire tampon d'historique en utilisant la transition du niveau candidat NG, confirme OK ou NG sur un ou plusieurs éléments candidats NG des éléments sur la base d'un résultat du test, et en mettant à jour le drapeau OK confirmé ou le drapeau NG confirmé correspondant à chacun des éléments candidats NG dans la mémoire tampon de candidats NG ; et
l'unité de mise à jour de l'étiquette de référence d'apprentissage (11e) met à jour, d'une étiquette NG à une étiquette OK, l'étiquette de référence d'apprentissage correspondant à un élément confirmé comme étant OK par l'unité de test, parmi les éléments candidats NG.
